(19) Europäisches Patentamt

European Patent Office

Office européen des brevets

(11) **EP 0 459 074 B1**

(12) **EUROPEAN PATENT SPECIFICATION**

(45) Date of publication and mention
of the grant of the patent:
**30.08.2000 Bulletin 2000/35**

(51) Int. Cl.[7]: **C08F 279/04**

(21) Application number: **90870087.5**

(22) Date of filing: **01.06.1990**

(54) **Graft-modified polymers containing alpha-methyl styrene and process for preparing same**

Mit Pfropfung modifizierte alpha-Methyl-Styren enthaltende Polymere und Verfahren zu deren Herstellung

Copolymères modifiés par greffage contenant de l'alpha-méthyl-styrène et leur préparation

(84) Designated Contracting States:
**AT BE CH DE DK ES FR GB GR IT LI LU NL SE**

(43) Date of publication of application:
**04.12.1991 Bulletin 1991/49**

(73) Proprietor: **BAYER ANTWERPEN N.V.**
**2040 Antwerpen (BE)**

(72) Inventors:
• **Schwier, Chris Edward**
**Pensacola, Florida 32514 (US)**

• **Wu, Wan Chu**
**Longmeadow, Massachusetts 01106 (US)**

(74) Representative:
**Klimiuk-Japadita, Meike et al**
**Bayer AG**
**Konzernbereich RP**
**Patente und Lizenzen**
**51368 Leverkusen (DE)**

(56) References cited:
**EP-A- 0 079 657**        **EP-A- 0 083 946**
**EP-A- 0 146 035**        **DE-B- 1 251 539**

## Description

BACKGROUND OF THE INVENTION

This invention relates to polymers of α-methyl styrene (AMS) and acrylonitrile and more particularly to graft-modified versions of such polymers.

U.S. 4,598,124 discloses a continuous process for forming styrene (S), acrylonitrile (AN) copolymers containing a graft copolymer of such SAN copolymer on a rubber substrate as a dispersed phase. Continuous polymerization processes have well-documented advantages over batch emulsion, suspension or like systems where product is manufactured in discrete units of production. Such continuous processes a) can consistently provide a product of uniform compositional quality; b) tend to be environmentally safe in generating little or no waste effluent since unused raw materials are generally recycled; c) are reduced in complexity since having fewer steps and equipment components and therefore reduced capital and operating costs.

DE-A-1.251.539 discloses a copolymerisation process whereby a dienerubber is polymerised with amsianis in a sequential polymerisation arrangement.

It is also well established to include α-methyl styrene in SAN polymers to improve heat resistance for certain demanding applications. Since polymer heat resistance is proportional to the level of AMS in the polymer, maximum heat resistance should result with maximum AMS content or, more specifically, by completely replacing S with AMS in such copolymers. However, AMS is also known to be difficultly polymerizable at the economical rates usually associated with continuous polymerization systems and correspondingly difficult to graft onto rubber when toughened, high heat resistant products are desired. It is further known to include S in batch polymerization formulations in rubber-modified systems containing AMS and AN. However, conventional wisdom in the art would expect that including S at the expense of AMS in the polymer should proportionately undesirably reduce polymer heat resistance.

## SUMMARY OF THE INVENTION

Now improvements have been recognized in continuous polymerization systems for forming graft-modified high heat polymers containing polymerized AMS which alleviate problems encountered in the prior art.

Accordingly, a principal object of this invention is to provide a toughened AMS polymer having a desirable balance of performance properties including good heat resistance.

An additional object is to provide such a polymer made at economical rates in a continuous polymerization system.

These and other objects are accomplished by a method of forming a composition of an interpolymer matrix of monoalkenyl aromatic monomer, α-alkyl monoalkenyl monomer and ethylenically unsaturated nitrile monomer containing as a dispersed phase discrete particles of rubber grafted with said interpolymer, said composition having a Vicat softening temperature of at least 117°C, said method comprising : continuously mass or solution polymerizing said monomers in the presence of said rubber which is initially dissolved in said monomers of form said interpolymer and grafted rubber particles, the amount of monoalkenyl aromatic monomer present during polymerization being adequate to provide 5 to 25 weight % polymerized monoalkenyl aromatic monomer in the interpolymer.

In another preferred aspect of the method herein, continuously mass polymerizing monomers takes place in a first reactor followed by continuously feeding the partially polymerized reaction mixture from the first reactor along with additional AMS and acrylonitrile and optional additional polymerizable monomers to a second reactor and continuously polymerizing therein the mixture from the first reactor and said additional monomers.

The inventive process can produce an interpolymer matrix comprising, on a weight basis, 5 to 25% monoalkenyl aromatic monomer, 30 to 75% α-alkyl monoalkenyl monomer and 20 to 40% ethylenically unsaturated nitrile monomer.

Graft-modified interpolymer of S, AMS and AN made by method herein have about the same (i.e. no greater than 3°C Vicat difference) heat distortion temperature as a graft-modified copolymer of AMS and AN without the presence of S, the AMS content of the interpolymer being at least about 8, preferably at least 10 weight percent less than that of the copolymer.

In a more specific aspect, a thermoplastic composition is provided comprising at least 20% by weight of a graft interpolymer of monoalkenyl aromatic monomer, α-alkyl monoalkenyl aromatic monomer, ethylenically unsaturated nitrile monomer, and one or more optional additional monomer S on a rubber base, wherein the relative weight proportions of the monomers are 5 to 25% of the monoalkenyl aromatic monomer, 30 to 75% of the α-alkyl monoalkenyl. aromatic monomer, 20 to 40 % of the nitrile monomer and 0 to 10% of additional monomer; wherein the monomers are continuously mass polymerized in the presence of 5 to 25% by weight of the rubber having a glass transition temperature below 0°C, said composition having a Vicat heat distortion temperature of at least about 117°C.

DETAILED DESCRIPTION OF THE INVENTION

In continuous polymerization systems where polymerization desirably occurs at economical rates, monomeric S is needed in an AMS/AN mixture polymerizing in the presence of a toughening rubber to promote grafting of the AMS copolymer onto the rubber, which is otherwise difficult to achieve. However, adding S to promote grafting at the expense of AMS was conventionally thought to result in deterioration of polymer heat resistance. However, adding S to an AMS/AN copolymer unexpectedly does not result in significant deterioration in polymer heat resistance but rather, in the context of the invention, provides essentially the same heat resistance as the non-rubber-modified matrix. Though polymer heat resistance is characterized in the examples following as Vicat heat distortion temperature, the glass transition temperature ($T_g$) is directly correlatable with the Vicat value and therefore with polymer heat resistance. In other words, both measurements characterize the same polymer transition from a glassy to a rubbery state. Various AMS/S copolymers were prepared and their $T_g$'s and those of certain AMS/AN copolymers measured. Contrary to conventional prior art knowledge, it is very striking to note that AMS level alone does not predict the polymer heat resistance. For example, at a 50% constant value of AMS, gradually replacing with S some of the corresponding 50% AN in the copolymer increases $T_g$ up to a point where all AN is replaced with S. Moreover $T_g$ has been found to be equivalent for two different AMS-based products, i.e. a 68/32/0 AMS/AN/S polymer and the 55/26/19 AMS/AN/S rubber-modified product, the latter being the subject of Example 3 following. Thus, one interpolymer has at least about 8, preferably at least 10 and actually 13 weight % less AMS than that of a second copolymer. In this regard, since the first dispersed rubber phase in the sample is non-continuous, it was found to have no effect on $T_g$ of the matrix interpolymer. The unexpected results as preservation of heat resistance of an AMS interpolymer containing S leads, according to the invention, to a graft-modified S/AMS/AN interpolymer made by continuous polymerization (to be further explained) which has about the same heat distortion temperature (i.e. no more than 3°C below) as that of a graft-modified copolymer of AMS/AN without S. Such heat distortion temperature, identified here as the Vicat softening temperature, for the polymers of concern in this invention, is preferably at least about 117° C and most preferably 120°C.

The dotted line represents the $T_g$ and heat resistance drop-off which would be expected before this invention when modifying a high heat AMS polymer by replacing AMS and AN with S. The data of Fig. 2 depicts the effect on $T_g$ of including S in the terpolymer while keeping the AMS/AN ratio constant. The terpolymer compositions within the arrows on the solid line in Fig. 2 between A and B represent compositions providing desirable $T_g$ and heat resistance having S levels promoting good grafting of the AMS-terpolymer to the rubber graft base. At S levels above 25% in the terpolymer $T_g$ is too adversely affected, whereas at less than 5% S, grafting to promote rubber particle stability after formation is insufficient to the extent required for good polymer properties.

The continuous polymerization system of the invention uses two completely filled stirred (70 RPM) tank reactors, each having an external electric heating jacket and an internal air cooling coil, arranged in series followed by a single stage wiped film devolatilizer for removing unreacted monomer from the polymer formed. The system is operated so the grafting reaction occurring in the first reactor is proportionately greater than grafting formation in the second reactor. At least 15 parts by weight of interpolymer graft per 100 parts by weight of rubber are formed in the first reactor. The reaction in the second reactor ($R_2$) is predominantly formation of the interpolymer of the monomers, such interpolymer being chemically unattached to and forming a matrix for the rubber-modified graft interpolymer. Polymer product from the system is a mixture of at least 20% by weight of (i) a graft interpolymer of monoalkenyl aromatic monomer (S), α-alkyl monoalkenyl aromatic monomer (AMS), ethylenically unsaturated nitrile monomer (AN) and one or more optional additional monomers further described below, on a rubber base dispersed in (ii) a matrix interpolymer correspondingly to that grafted onto the rubber. Preferred weight proportions of monomers of the interpolymer are 5 to 25% of the monoalkenyl aromatic monomer, 30 to 75 % (preferably 45 to 65%) of the α-alkyl monoalkenyl aromatic monomer, 20 to 40% of the nitrile monomer and 0 to 10% of additional monomer, wherein such monomers are continuously mass polymerized in the presence of 5 to 25% by weight of the rubber which preferably has a glass transition temperature of below 0°C.

Additional copolymerizable optional monomers can be used at low levels to achieve further property modification of the AMS/AN/S interpolymer depending on the identity of the monomer(s). The content of these additional monomers in the interpolymer should be less than 10 weight percent since if more than 10% the reaction ratios of the other monomeric constituents are significantly affected so as not to provide the beneficial heat performance desired. Preferred additional monomers to enhance heat resistance include maleimides such as n-phenyl maleimide at amounts in the final polymer of less than 5%.

Suitable rubbers for forming the graft-modified interpolymer of the invention include conjugated diene rubbers including polybutadiene, butadiene/S block and random copolymers with up to 30% by weight of S, butadiene/AN copolymers with up to 20% by weight of a lower alkyl ester of acrylic or methacrylic acid, for example methyl acrylate, ethyl acrylate, or ethyl methacrylate. Examples of other suitable rubbers are polyisoprene or polychloroprene. Alkyl acrylate rubbers based on $C_1$-$C_8$-alkyl esters of acrylic acid, for example ethyl, butyl and/or ethylhexyl acrylate, are also suitable. Such alkyl acrylate rubbers can optionally contain up to 30% by weight of copolymerized monomers such as vinyl acetate, AN, S, methyl methacrylate or vinyl ether. Such alkyl acrylate rubbers can also contain smaller quantities, for example up to 5% by weight, of ethylenically unsaturated monomers having a crosslinking function. Examples of such crosslinking agents are alkylenediol di(meth)acrylates, polyester di(meth)acrylates, divinylbenzene and trivinylbenzene, triallyl cyanurate and allyl(meth)acrylate. Alkyl acrylate rubbers of these types are known in the literature. Acrylate rubbers suitable as a grafting base for the preparation of graft polymer component can also be products which contain, as the core, a crosslinked diene rubber of one or more conjugated dienes such as polybutadiene, or of a copolymer of a conjugated diene with an ethylenically unsaturated monomer such as S and/or AN. Examples of other suitable rubbers are EPDM rubbers, i.e. rubbers of ethylene, propylene and an unconjugated diene monomer. Particularly preferred rubbers are diene rubbers having a glass transition temperature below 0°C.

Suitable solvents can be used in the continuous polymerization system employed, for example, to dilute the reaction mixture and optimize the polymerization process. Such solvents, identified as diluents, are recited in col. 14, lines 17-25 of U.S. 4,598,124, such content of which is incorporated herein by reference.

Additional optional property-enhancing additives such as stabilizers, antioxidants, flow modifiers and the like, well known to those skilled in the art may be included in the polymerization formulation as found desirable.

The following tests were run to obtain values for the various ingredient amounts and polymer performance properties recited in Examples herein.

1. Inverted Dart Impact (J) was measured using an instrumented inverted driven dart machine at ambient temperature. The energy to maximum in Joules was the average of the total energy absorbed by an injection molded sample specimen at the point of maximum stress in the force/time curve. This is believed to be when the first cracks form.

2. Notched Izod Impact (J/m notch); ASTM D-256.

3. Tensile Strength was measured at 25°C using an Instron Model 1123 at 5.0 mm/min on 1/8" (0.3 cm) x 1/2" (1.3 cm) x 5" (12.7 cm) dogbone samples (ASTM D-638).

4. Vicat softening temperature is the temperature of an oil bath being heated at 2°C/min when a metal pin of 1.0 $mm^2$ surface area under a 1 kg load has penetrated 1 mm into the molded sample immersed in the oil bath. The average of two conditioned samples was reported and is quite similar to the $T_g$. All other specifications for the test procedure follow ASTM D-1525 and ISO-306.

5. Percent AN by elemental analysis using elemental analyzer Model 102, Erba Instruments Inc., 3 Dearborn Road, Peabody, Massachusetts.

6. Percent rubber was determined from a mass balance of the reactors.

7. Gel Level was found by dispersing about one gram of the polymer (or equivalent amount of syrup from a reactor) in 5 grams of methyl ethyl ketone (MEK) and measuring the fraction recovered after centrifuging for 4 hours at 22,500 RPM in a Beckman Model L ultracentrifuge. The MEK soluble fraction which is the matrix polymer was also recovered.

8. Percent Graft in units of parts graft per 100 parts rubber, is the difference between the gel level and rubber level normalized by the fraction of rubber. The graft level represents both grafted matrix and matrix occlusions inside the rubber particles.

9. Rubber Particle Size Distribution was measured in a disc centrifuge operating at 2250 RPM and containing a 50/50 DMF/Acetone mixture. Approximately 0.2 mg of particles are injected as a dispersion of 2 mg particles/ml of acetone. The weight average particle size (Dw) in microns is reported.

10. AMS level in the matrix polymer as a ratio to the S was measured on a General Electric Carbon 13 NMR system (GN-300 spectrometer, 300 MHz - Proton/75 MHz - Carbon).

11. Glass Transition Temperature, $T_g$, was measured on about a 20 mg sample of methanol precipitated matrix polymer in a sealed aluminum pan using a Perkin Elmer DSC-2 at a 20°C/min scan rate. Samples were heated from 50°C to 170°C, quickly cooled then repeated to find $T_g$. Indium standard was used (156.60°C melting point and 6.80 cal/g °C heat capacity).

The invention is further described with reference to the following examples which are for illustration only and are not intended to imply any limitation or restriction on the invention. Unless otherwise indicated, all quantities are expressed in weight.

EXAMPLE 1

This control example not according to the invention illustrates preparation by continuous mass polymerization of a graft-modified copolymer of AMS/AN without the presence of S.

8.3 parts of a 90/10 butadiene/S block copolymer rubber available as Stereon 721A from Firestone Synthetic Rubber and Latex Company, Akron, Ohio was dissolved in a monomer mixture of 45.0 parts AMS and 18.9 parts AN to form a solution of rubber in monomer. This solution was fed to a first reactor ($R_1$) operating at 112°C which was sufficiently stirred to maintain an essentially uniform composition throughout. About 0.043 parts t-butylyperoxy-2-ethlyhexanoate (TBPO) initiator was added to the rubber-monomer solution during feeding to $R_1$. The feed stream was added continuously to $R_1$ so as to have an average residence time of about 2 hr providing about 30% polymer solids in $R_1$.

The partially polymerized reaction mixture from $R_1$ was fed continuously to a second reactor ($R_2$) operating at 115°C in a steady state manner with a polymer solids content of 47.7% and an average residence time of 1.5 hr. A second feed stream of 20.6 parts AMS, 5.5 parts AN and 0.191 parts TBPO was added to $R_2$ along with the partially polymerized reaction mixture from $R_1$. The parts fed total 100 and represent the relative ratios of feed materials fed and polymerized to form the polymer. The reaction mixture withdrawn from $R_2$ was devolatilized continuously in a wiped film devolatilizer operating at 250°C and 30 Torr to provide a polymer having a rubber content of 18.5%.

It was attempted to measure rubber particle size Dw from $R_1$ and in the devolatilized polymer using the technique defined above which is only accurate for sizes below 2 micron. It was not possible to measure rubber particle size using this method and it was therefore concluded that the particles were larger than 2 micron. % graft in the polymer from $R_1$ was 9.1%.

Polymer strands exiting the devolatilizer and injection molded specimens prepared from the polymer had a coarse, rough, non-uniform visual appearance and to finger touch, which was attributed to instability of the rubber dispersion - i.e. the particles were undesirably agglomerated and adhered together in clusters. Other tests on molded specimens produced the following results:

IDI (J) 20
Izod (J/M) 217
Tensile Strength at Yield (MPa) 36
Vicat (°C) 121

EXAMPLE 2

This invention Example shows the effect on rubber particle size of S in the feed to $R_1$. The second reactor $R_2$ was not used since it was felt that once formed, the rubber particle with grafting will not significantly change in size as it proceeds through the remainder of the continuous polymerization system.

9.3 parts of Stereon 721A were dissolved in various amounts of S and AMS and 32.4 parts AN to form a rubber in monomer solution which, as in Example 1, was fed to $R_1$ operating at 90°C. About 0.056 parts t-butylperoxy neodeconoate were used as initiator. After about 12 hr to achieve steady state conditions, samples were taken and rubber particle size and % graft measured. Results were as follows:

| % Monomers In Feed | | Dw | % Graft |
|---|---|---|---|
| S | AMS | | |
| 9.9 | 54.4 | 0.75 | 36.8 |
| 14.3 | 50 | 0.71 | 44.7 |
| 18.4 | 45.9 | 0.85 | 35.5 |

In comparison with the 9.1% graft (i.e. 9.1 parts of graft interpolymer per 100 parts rubber) and large (>2 micron) particle size from $R_1$ in Example 1, the above results show that when the AMS monomer in the $R_1$ feed is replaced with about 9 to 19% S, significantly more grafting onto the rubber occurs to desirably result in smaller rubber particles which should provide (see following Example 3) a good balance of properties and molded surface appearance in the polymer. Based on these results at least 15% graft formation in the first reactor is thought necessary to obtain the desired rubber particle size. From the above data, at about 14-20 and particularly about 19% S in the S/AMS/AN monomer feed high grafting (36 to 45% at 14.3 to 18.4% S) and a desirable Dw of less than 1 micron occurs.

EXAMPLE 3

This invention Example extends Example 2 and shows the quality of final polymer product obtained using the complete continuous mass polymerization system and constituent ratios in $R_1$ which were defined in Example 2.

The polymerization procedure of Example 1 was repeated except that the proportions of constituents and operating conditions were as follows:

|  | First Reactor Feed (parts) | Second Reactor Feed (parts) | |
|---|---|---|---|
| Rubber | 7.6 | -- | |
| S | 13.7 | -- | |
| AMS | 34.4 | 19.6 | |
| AN | 20.6 | 3.9 | |
| Initiator | 0.06 | 0.17 | |
|  | $\overline{76.36}$ | $\overline{23.67}$ | |
| Conditions | | | |
|  | $R_1$ | $R_2$ | $D_v$ |
| Temperature | 93 | 114 | 245 |
| % Solids | 25 | 55 | -- |
| Residence Time (hr) | 2.3 | 1.9 | -- |
| Polymer Structure | | | |
|  |  | $R_1$ | $R_2$ |
| % AN |  | 26 | 26 |
| % Rubber |  | 40 | 14 |
| % Graft |  | 21 | 67 |
| Particle Size Dw |  | 0.7 | 0.9 |
| Matrix $T_g$ (°C) |  |  | 123 |

Polymer strands from the devolatilizer (and molded specimens referred to below) were observed to have a high degree of surface uniformity in appearance and were smooth to the touch signifying stable, small rubber particles. The interpolymer matrix in which The grafted rubber was dispersed was analyzed to be 26% AN, 55% AMS and 19% S having a viscosity average molecular weight of 70 kg/mole.

Test results on injection molded specimens were as follows:

| Vicat (°C) | 120 |
|---|---|
| Izod (J/M) | 160 |
| IDI (J) | 24 |
| Tensile Strength at Yield (MPa) | 45.5 |

The above results show a rubber-modified AMS-AN polymer containing between 5 to 25% (i.e. 19%) copolymerized S formed by continuous mass polymerization having high graft and stable rubber particles of less than 1 micron Dw. Impact and tensile strength indicate good dispersion of the rubber in the matrix. Despite 19% S in the graft and matrix (to promote grafting of AMS and formation of the proper rubber particle size) the 120°C Vicat heat distortion was within 3°C (1°C actual) of the 121°C Vicat for the polymer of Example 1 where no S was present.

The preceding description is for illustration only and is not be taken in a limited sense. Various modifications and alterations will be readily suggested to persons skilled in the art. It is intended, therefore, that the foregoing be considered as exemplary only and that the scope of the invention be ascertained from the following claims.

## Claims

1. A method of forming a composition of an interpolymer matrix of monoalkenyl aromatic monomer, $\alpha$-alkyl monoalkenyl monomer and ethylenically unsaturated nitrile monomer containing as a dispersed phase discrete particles of rubber grafted with said interpolymer, said composition having a Vicat softening temperature of at least 117°C, said method comprising:

    continuously mass or solution polymerizing said monomers in the presence of said rubber which is initially dissolved in said monomers to form said interpolymer and grafted rubber particles, the amount of monoalkenyl aromatic monomer present during polymerization being adequate to provide 5 to 25 weight % polymerized monoalkenyl aromatic monomer in the interpolymer.

2. The method of claim 1 wherein the interpolymer formed comprises, on a weight basis, 5 to 25% monoalkenyl aromatic monomer, 30 to 75% $\alpha$-alkyl monoalkenyl monomer and 20 to 40% ethylenically unsaturated nitrile monomer.

3. The method of claim 2 or 1 wherein The monoalkenyl aromatic monomer is styrene, the $\alpha$-alkyl monoalkenyl monomer is alpha methyl styrene and the ethylenically unsaturated nitrile monomer is acrylonitrile.

4. A method of forming a composition comprising an interpolymer matrix of styrene, alpha methyl styrene, acrylonitrile and one or more optional additional polymerizable monomers in minor amount containing as a dispersed phase discrete particles of rubber grafted with said interpolymer, said composition having a Vicat softening temperature of at least 117°C, said method comprising:

    i) dissolving rubber having a glass transition temperature below 0°C in a mixture of styrene, alpha methyl styrene, acrylonitrile and optionally, said one or more additional polymerizable monomers to form a solution of rubber in monomers;
    ii) continuously feeding said solution to a first reactor sufficiently stirred to maintain an essentially uniform composition throughout the reactor;
    iii) continuously mass polymerizing monomers of said solution and grafting said monomers or polymers onto the rubber while forming said discrete rubber particles in said first reactor, at least 15 parts by weight of grafted polymer per 100 parts by weight of rubber being formed therein;
    iv) continuously feeding the partially polymerized reaction mixture from the first reactor along with additional alpha methyl styrene and acrylonitrile monomers and, optionally, one or more of said additional polymerizable monomers, to a second reactor sufficiently stirred to maintain an essentially uniform composition throughout such second reactor; and
    v) continuously mass polymerizing in said second reactor monomers in the mixture from the first reactor and said additional alpha methyl styrene and acrylonitrile monomers and optional one or more additional monomers to form said matrix interpolymer for the grafted rubber particles formed in the first reactor, the amount of monoalkenyl aromatic monomer present during polymerization being adequate to provide 5 to 25 weight % polymerized monoalkenyl aromatic monomer in the interpolymer.

5. The process of claim 4 wherein the rubber is a diene rubber and the size of the particles issuing from the second reactor is less than one micron Dw.

6. The process of claim 4 wherein said solution in step i) contains 9 to 20% by weight styrene monomer.

7. The process of claim 5 wherein the interpolymer matrix from the second reactor comprises, on a weight basis, 5 to 25% monoalkenyl aromatic monomer, 30 to 75% $\alpha$-alkyl monoalkenyl monomer and 20 to 40% ethylenically unsaturated nitrile monomer.

8. The process of claim 4, 5, 6 or 7 wherein the composition has a Vicat softening temperature of at least 120°C.

## Patentansprüche

1. Verfahren zur Bildung einer Zusammensetzung einer Interpolymer-Matrix eines aromatischen Monoalkenyl-Monomers, eines $\alpha$-Alkylmonoalkenyl-Monomers und eines ethylenisch ungesättigten Nitrilmonomers, enthaltend als dispergierte Phase diskrete Teilchen eines mit dem Interpolymer gepfropften Kautschuks, wobei die Zusammensetzung eine Vicat-Erweichungstemperatur von wenigstens 117°C aufweist, wobei das Verfahren die kontinuierliche Polymerisation in Masse oder Lösung der Monomere in Gegenwart des anfänglich in den Monomeren gelösten Kautschuks zur Bildung des Interpolymers und der gepfropften Kautschukteilchen, wobei die Menge des bei der Polymerisation vorhandenen aromatischen Monoalkenyl-Monomers ausreichend ist, um 5 bis 25 Gew.-% polymerisiertes aromatisches Monoalkenyl-Monomer im Interpolymer zu ergeben, umfasst.

2. Verfahren nach Anspruch 1, wobei das gebildete Interpolymer, bezogen auf das Gewicht, 5 bis 25 % aromatisches Monoalkenyl-Monomer, 30 bis 75 % $\alpha$-Alkylmonoalkenyl-Monomer und 20 bis 40 % ethylenisch ungesättigtes Nitrilmonomer umfasst.

3. Verfahren nach Anspruch 1 oder 2, wobei das aromatische Monoalkenyl-Monomer Styrol ist, das $\alpha$-Alkylmonoalkenyl-Monomer $\alpha$-Methylstyrol ist und das ethylenisch ungesättigte Nitrilmonomer Acrylnitril ist.

4. Verfahren zur Bildung einer Zusammensetzung, umfassend eine Matrix aus Styrol, $\alpha$-Methylstyrol, Acrylnitril und ein oder mehrere optionale, zusätzliche polymerisierbare Monomere in einer kleineren Menge, enthaltend als dispergierte Phase diskrete Teilchen aus Kautschuk, der mit dem Interpolymer gepfropft ist, wobei die Zusammensetzung eine Vicat-Erweichungstemperatur von wenigstens 117°C aufweist, wobei das Verfahren das:

   i) Lösen des Kautschuks mit einer Glasübergangstemperatur unterhalb von 0 °C in einer Mischung von Styrol, $\alpha$-Methylstyrol, Acrylnitril und gegebenenfalls dem einen oder den mehreren zusätzlichen Monomer(en) zur Bildung einer Lösung von Kautschuk in Monomeren,

   ii) kontinuierliche Zuführen der Lösung zu einem ersten Reaktor, der ausreichend gerührt ist, um eine im wesentlichen gleichmäßige Zusammensetzung im gesamten Reaktor aufrecht zu erhalten;

   iii) kontinuierliche Polymerisieren in Masse der Monomere der Lösung und das Pfropfen der Monomere oder Polymere auf den Kautschuk, während die diskreten Kautschukteilchen in dem ersten Reaktor gebildet werden, von wenigstens 15 Gew.-Teilen des gepfropften Polymers auf 100 Gew.-Teile darin gebildeten Kautschuks;

   iv) kontinuierliche Zuführen der teilweise polymerisierten Reaktionsmischung aus dem ersten Reaktor zusammen mit zusätzlichem $\alpha$-Methylstyrol- und Acrylnitril-Monomer und gegebenenfalls einem oder mehreren der zusätzlichen polymerisierbaren Monomere zu einem zweiten Reaktor, der ausreichend gerührt ist, um eine im wesentlichen gleichmäßige Zusammensetzung in diesem zweiten Reaktor aufrecht zu erhalten, und das

   v) in dem zweiten Reaktor erfolgende kontinuierliche Polymerisieren in Masse von Monomeren in der Mischung aus dem ersten Reaktor und den zusätzlichen $\alpha$-Methylstyrol- und Acrylnitril-Monomeren und gegebenenfalls einem oder mehreren zusätzlichen Monomeren zur Bildung des Matrix-Interpolymers für die im ersten Reaktor gebildeten, gepfropften Kautschukteilchen, wobei die Menge des während der Polymerisation vorhandenen aromatischen Monoalkenyl-Monomers ausreichend ist, um 5 bis 25 Gew.-% polymerisiertes aromatisches Monoalkenyl-Monomer im Interpolymer zu ergeben,

   umfasst.

5. Verfahren nach Anspruch 4, wobei der Kautschuk ein Dienkautschuk ist und die Größe der aus dem zweiten Reaktor austretenden Teilchen kleiner als 1 $\mu$m Dw ist.

6. Verfahren nach Anspruch 4, wobei die Lösung in Schritt i) 9 bis 20 Gew.-% Styrol-Monomer enthält.

7. Verfahren nach Anspruch 5, wobei die Interpolymer-Matrix aus dem zweiten Reaktor, bezogen auf das Gewicht, 5 bis 25 % aromatisches Monoalkenyl-Monomer, 30 bis 75 % $\alpha$-Alkylmonoalkenyl-Monomer und 20 bis 40 % ethylenisch ungesättigtes Nitrilmonomer umfasst.

8. Verfahren nach Anspruch 4, 5, 6 oder 7, wobei die Zusammensetzung eine Vicat-Erweichungstemperatur von wenigstens 120 °C aufweist.

## Revendications

1. Procédé de formation d'une composition d'une matrice interpolymère d'un monomère aromatique monoalcénylé, d'un monomère α-alkyl-monoalcénylé et d'un monomère de nitrile à insaturation éthylénique contenant, sous la forme d'une phase dispersée, des particules discrètes de caoutchouc greffé avec ledit interpolymère, ladite composition possédant une température de ramollissement à la chaleur selon Vicat s'élevant à au moins 117°C, ledit procédé comprenant le fait de:

polymériser en masse ou en solution en continu lesdits monomères en présence dudit caoutchouc qui est dissous dans un premier temps dans lesdits monomères pour former ledit interpolymère et lesdites particules de caoutchouc greffé, la quantité du monomère aromatique monoalcénylé présent au cours de la polymérisation étant adéquate pour obtenir un monomère aromatique monoalcénylé polymérisé à concurrence de 5 à 25% en poids dans l'interpolymère.

2. Procédé selon la revendication 1, dans lequel l'interpolymère formé comprend, sur une base pondérale, un monomère aromatique monoalcénylé à concurrence de 5 à 25%, un monomère α-alkyl-monoalcénylé à concurrence de 30 à 75% et un monomère de nitrile à insaturation éthylénique à concurrence de 20 à 40%.

3. Procédé selon la revendication 2 ou 1, dans lequel le monomère aromatique monoalcénylé est le styrène, le monomère α-alkyl-monoalcénylé est l'α-méthylstyrène et le monomère de nitrile à insaturation éthylénique est l'acrylonitrile.

4. Procédé de formation d'une composition comprenant une matrice interpolymère de styrène, d'α-méthylstyrène, d'acrylonitrile et d'un ou de plusieurs monomères polymérisables supplémentaires facultatifs dans des quantités mineures, contenant, sous la forme d'une phase dispersée, des particules discrètes de caoutchouc greffé avec ledit interpolymère, ladite composition possédant une température de ramollissement à la chaleur selon Vicat s'élevant à au moins 117°C, ledit procédé comprenant le fait de:

i) dissoudre du caoutchouc possédant une température de transition vitreuse inférieure à 0°C dans un mélange de styrène, d'alpha-méthylstyrène, d'acrylonitrile et le cas échéant dudit ou desdits monomères polymérisables supplémentaires pour former une solution de caoutchouc dans les monomères;
ii) alimenter en continu ladite solution dans un premier réacteur suffisamment agité pour maintenir une composition essentiellement uniforme à travers le réacteur;
iii) polymériser en masse en continu les monomères de ladite solution et greffer lesdits monomères ou lesdits polymères sur le caoutchouc tout en formant lesdites particules de caoutchouc discrètes dans ledit premier réacteur, au moins 15 parties en poids du polymère greffé par 100 parties en poids du caoutchouc étant formées dans ledit premier réacteur;
iv) alimenter en continu le mélange réactionnel partiellement polymérisé provenant du premier réacteur conjointement avec des monomères supplémentaires d'alpha-méthylstyrène et d'acrylonitrile et le cas échéant d'un ou de plusieurs desdits monomères polymérisables supplémentaires, à un second réacteur suffisamment agité pour maintenir une composition essentiellement uniforme à travers ledit second réacteur; et
y) polymériser en masse en continu dans ledit second réacteur les monomères dans le mélange provenant du premier réacteur et lesdits monomères supplémentaires d' alpha-méthylstyrène et d'acrylonitrile, ainsi qu'un ou plusieurs monomères supplémentaires facultatifs pour former ledit interpolymère matriciel pour les particules de caoutchouc greffé formées dans le premier réacteur, la quantité du monomère aromatique monoalcénylé présent au cours de la polymérisation étant adéquate pour procurer un monomère aromatique monoalcénylé polymérisé à concurrence de 5 à 25% en poids dans l'interpolymère.

5. Procédé selon la revendication 4, dans lequel le caoutchouc est un caoutchouc diénique et la dimension des particules évacuées du second réacteur est inférieure à 1 micron Dw.

6. Procédé selon la revendication 4, dans lequel ladite solution à l'étape i) contient un monomère de styrène à concurrence de 9 à 20% en poids.

7. Procédé selon la revendication 5, dans lequel la matrice interpolymère provenant du second réacteur comprend, sur une base pondérale, un monomère aromatique monoalcénylé à concurrence de 5 à 25%, un monomère α-alkyl-monoalcénylé à concurrence de 30 à 75% et un monomère de nitrile à insaturation éthylénique à concurrence de 20 à 40%.

8. Procédé selon la revendication 4, 5, 6 ou 7, dans lequel la composition possède une température de ramollissement à la chaleur selon Vicat s'élevant à au moins 120°C.